# EUROPEAN PATENT APPLICATION

(11) **EP 4 830 684 A1**
(43) Date of publication of application: **28.10.2026**
(21) Application number: 26387008.1
(22) Date of filing: 20.01.2026
(51) Int. Cl.: A61H 1/02

(54) **FLEXIBLE EXOSKELETAL KNEE EXTENSION SYSTEM**

(30) Priority: 27.01.2025 GR 20250100058
(71) Applicant: University of Thessaly, 38221 Volos (GR)
(72) Inventor: VARTHOLOMEOS, Panagiotis, Athens, Attiki (GR); LEVENTAKIS, Nikolaos, Ag. Paraskevi Attikis (GR)
(74) Representative: Panagiotidou, Effimia

(57) **Abstract**

The invention is a force transfer and amplification mechanism consisting of a block-and-tackle (10) comprising a flexible tensile member (11) reeved through pulleys. The block-and-tackle (10) connects at least two articulated arms (20 and 30 or 40 and 50), each arm being articulated to a base (2 and 3 or 2 and 5) and each base being attached via flexible tensile members (4) to a supported member of the body. In addition, each base and each arm is anchored exclusively via flexible tensile members (61-67) to adjacent unsupported body members or to another base.

## Description

The invention belongs to the field of exoskeletal robotic systems for assisting lower limb movement using flexible tensile members in combination with rigid and flexible elements.

The invention can be used to assist the quadriceps muscles of the legs, specifically to assist the extension of the knee joint as well as the controlled deceleration of the knee joint flexion.

Exoskeletal robotic systems for assisted rehabilitation of lower and upper limb function, are used by people with neurological and musculoskeletal diseases, as well as by people with walking problems due to senile weakness, with the common denominator being motor and functional impairment.

The technical problem with exoskeletal robotic systems at the current state of the art is that the pulling forces generated by their motors are transformed, by the mechanisms of each exoskeletal system, into relatively low knee extension torques and relatively high undesirable compressive reaction forces at other points on the users' body.
A specific technical problem of the above general technical problem is the weight and volume of a flexible exoskeletal system, a parameter that depends largely on its motors. The weight and volume of the motors, for a given load, depend directly on the coefficient of transformation of the motor's pulling force into knee extension torque.
With regard to unwanted reaction forces, many systems of the current state of the art exhibit the following technical problems: (a) The mechanical limitation of the complex physical kinematics of the biological knee joint (multiple degrees of freedom), as they use rigid mechanical joints that allow movement in only one degree of freedom and prevent movement in the other degrees of freedom. (b) The application of undesirable pressures on the body, as the force is transferred from the motor to the end effector and as it is transformed from a pulling force to a knee extension torque. (c) Several systems of the current state of the art, when used, slip from their initial position and soon end up exerting undesired forces in the wrong places. (d) The inability to adapt the exoskeletal system to each user's body type, contributes to the further development of unwanted reaction forces on the individual user.

In the case of the large group of patients who have the ability for static and dynamic balance but have significant mobility problems, the goal is to restore functional mobility and a normal gait pattern. This goal is achieved with the use of flexible robotic exoskeletal systems that do not restrict the natural kinematics of human joints and are relatively lightweight.

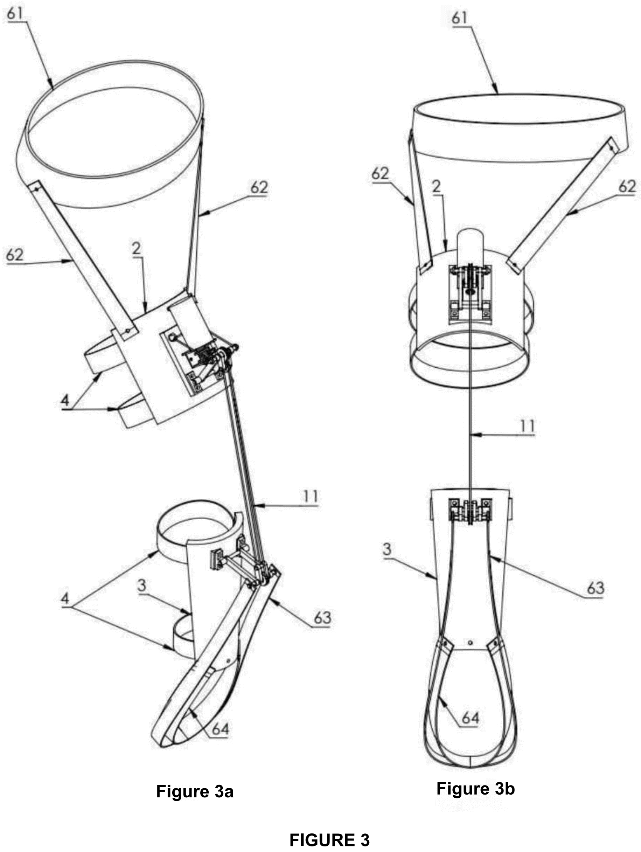

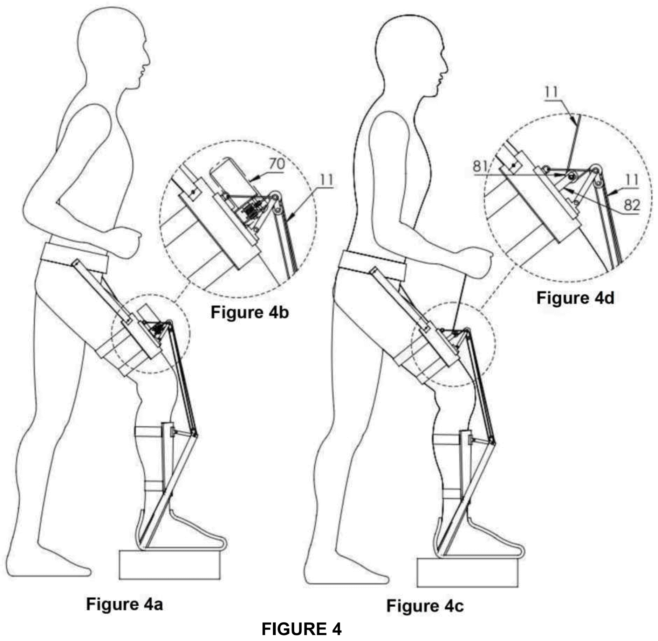

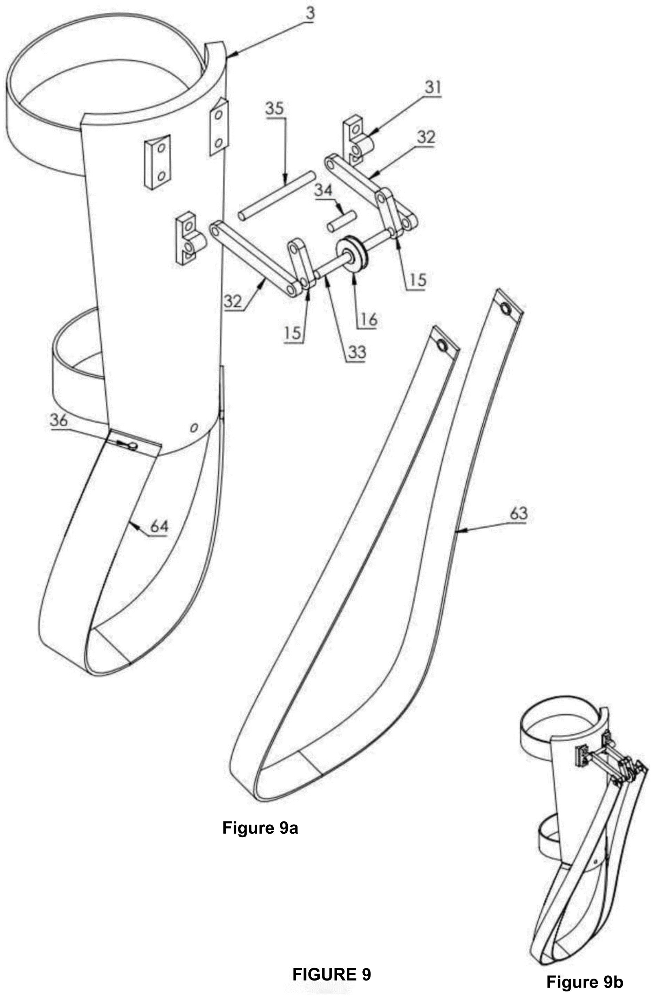

In previous technical documents, such as US11491074B2 and publications such as: "Design of a Lightweight, Tethered, Torque-Controlled Knee Exoskeleton," Steven H. Collins, Carnegie Mellon, 2017, and "User-driven walking assistance: first experimental results using the MyoSuit," Robert Riener, ETH, 2019, rigid rotational joints with one degree of freedom are used between frames supported on the thigh and shin, respectively. The same is found in FIG. 8A, 8B, and 8D of document US10864100. These mechanisms, as well as similar ones that have one degree of freedom for knee joint movement, limit the complex, multi-degree-of-freedom biological kinematics of the knee joint, particularly the relative displacement of the tibia and femur bones, as well as the home screw mechanism that occurs naturally during movement of this joint.
In particular, with regard to the invention described in document US10864100, the elastic connection of the thigh and shin bases as shown in FIG. 7C and 3B exerts elastic resistance forces against the displacement of the femur and tibia bones and the twisting of the knee joint, thus limiting these natural movements of the knee joint. This is mechanically aided by the fact that the thigh and shin bases consist of sheets that are positioned on either side of the thigh and shin, respectively, as shown in FIG. 4C and 9B, and not on the front of the thigh and shin, respectively.
The invention described in document US10864100 uses pulleys and rope between the protrusions of the thigh and shin bases (Fig. 7C), in a manner that only achieves transfer of the pulling force and not its multiplication, unlike the present invention, which achieves multiplication of the pulling force locally near the point of application of the force, using a block-and-tackle that has minimal additional weight. In addition, the above invention uses support protrusions on the thigh and shin (Fig. 19), which can flex under the weight exerted on them, unlike the present invention, which uses support bases for the protrusions on the thigh and shin that provide stability to the protrusions.
The system described in the publication "A hinge-free, non-restrictive, lightweight tethered exosuit for knee extension assistance during walking," Conor J. Walsh, Harvard, 2020, uses a protrusion only on the shin, unlike the present invention, which includes a protrusion on the thigh as well, in order to increase the lever arm of the pulling force. In addition, this publication uses a wire rope only to transfer the pulling force of the shin protrusion, unlike the present invention, which achieves multiplication of the pulling force locally near its point of application using a block-and-tackle. This publication also presents a system with motors on a base outside the user's body, in contrast to the present invention, which includes motors on the user's body for greater freedom of user's movement. Finally, it should be noted that the tilt angle of the protrusion of the shin in this publication is fixed and unchangeable, which does not allow for ergonomic adjustments to the individual user and the physical activity in question, unlike the present invention, which includes protruding articulated arms.
Document WO2018122106A1 relates to a device that achieves coupled rotation of the knee and hip joints and therefore does not allow the knee joint to move independently of the hip joint. In contrast, the present invention, on the one hand, achieves independent assistance of the knee joint by multiplying the pulling force near its point of application using a block-and-tackle and on the other hand includes a protrusion not only on the shin, but also on the thigh, in order to increase the lever arm of the pulling force.
In the publication "Design of a soft wearable device for hip and knee extension assistance", Chenglong Fu, Beijing and Shenzhen, 2019, a special type of block-and-tackle is used, consisting of rails and a wheeled carriage, placed in a knee cap inside a rigid shell. In contrast, the present invention uses a block-and-tackle and achieves multiplication of the pulling force locally near the point of application, without additional weights from rigid shells and rails. This publication also uses a Bowden cable (sheathed wire rope) to transfer the pulling force. Wire ropes require relatively large diameter reeving drums to prevent permanent kinking during reeving, which increases the volume and dimensions of the system. In contrast, the present invention provides the possibility of using simple, high-strength traction cords that can be reeved on much smaller diameters, saving space and providing flexibility for motor placement. In addition, in contrast to this publication, the present invention includes a protrusion on the thigh and shin, thereby increasing the lever arm of the pulling force.
In document CN111449915A, as shown in Figure 1, there is a block-and-tackle for multiplying the pulling force, which is placed behind the user's thigh, from where a Bowden cable starts, for the final activation of the knee joint movement, using a protrusion on the front of the thigh and a smaller protrusion on the shin. The routing of the cables and wires from the user's back, where the motors are located, to the shin, through the back of the thigh, may cause friction and pressure at various points on the user's body. In contrast to the invention described in document CN111449915A, the present invention achieves the multiplication of the pulling force locally near the point of application, without exerting forces on points of the body above the waist and behind the thighs.
In the publication "Design of a Lightweight, Tethered, Torque-Controlled Knee Exoskeleton," Steven H. Collins, Carnegie Mellon, 2017, it is stated in the conclusions that attaching their exoskeletal system exclusively around the thigh and shin was not sufficient to prevent it from sliding down during use, and that it would be necessary to suspend it from the user's waist or shoulders. The same applies to patent US11491074B2, which includes a similar arrangement. Finally, in the publication "Preliminary study for a soft wearable knee extensor to assist physically weak people," Woo Sok Chang and Kyu-Jin Cho, Seoul National University, 2014, the exoskeletal system presented is suspended from one of the user's shoulders. This type of suspension can cause the user to be unable to maintain proper posture and can also cause balance problems, due to the high reaction forces that are transferred from the system through the straps to the user's shoulder. In addition, the pulling force is transferred exclusively through a wire rope, whereas the present invention achieves a multiplication of the pulling force near its point of application using, on the one hand, a block-and-tackle mechanism, and, on the other hand, protrusions on the thigh and shin, in order to increase the lever arm of the pulling force.

The present invention does not relate to mechanisms that have a fixed, rigid rotational joint at knee height, nor does it relate to transmission mechanisms consisting solely of rigid elements. Furthermore, in the present invention, no hydraulic or pneumatic systems or inflatable elements are used to transmit motion to the knee joint.

In a brief disclosure of the invention, the present invention is an exoskeletal robotic extension torque exercise system for functional alignment of the knee joint.

The invention is a force transfer and amplification mechanism, consisting of a block-and-tackle, comprising a flexible tensile member, reeved through pulleys, which block-and-tackle connects two articulated arms, each arm being articulated to a base. Each base is attached via flexible tensile members to an assisted body member. Each base and each arm is anchored exclusively via flexible tensile members to adjacent unassisted body members or to another base.
The invention locally amplifies the torque by achieving the extension of the knee joint.

This extension is achieved by using flexible tensile members (ropes, cables, fabrics, etc.), as well as pulleys and levers, which, as motion transmission elements, are supported on two bases which in turn are attached to the moving limbs of the user's body, thigh and shin or thigh and knee, as well as other body parts not related to the assisted movement, in order to achieve effective anchoring and stabilization.

The first base is always fastened around the thigh and anchored with a strap to a belt around the user's waist, hereinafter referred to as a thigh pad. The second base can be fastened in two different ways: the first way is to fasten it around the shin and anchor it with a strap below the heel, hereinafter referred to as the shin pad; and the second way is to fasten it around the knee and anchor it with straps below the heel and to the thigh pad, in which case it will henceforth be referred to in the text as a knee pad. When the device uses a second base that is fastened to the shin, it will henceforth be referred to as a thigh-shin device. When the device uses a second base that is fastened to the knee, it will henceforth be referred to as a thigh-knee device.
In contrast to the current state of the art, the present invention does not use fixed protrusions, but rather arms that have joints at their base. The arms have one or more pulleys at their free end. The free end of the arms is also anchored to the bases or to the anchor points of the bases. In the middle of the base of the thigh pad, there is a winch from which a cord emerges, which is reeved through the pulleys of the block-and-tackle. The multiplied pulling force is exerted between the arms of the bases, which in turn create a lever arm to develop torque for the extension of the knee joint, and thanks to the joints at the bases of the arms, this lever arm can be adjusted by the user. The winch is set in motion either by a motor or by the user pulling one end of the cord. The block-and-tackle can provide different multiplication factors depending on how it is reeved. The invention is most effective when climbing or descending stairs or inclined planes.

The main advantages of the invention are as follows:
The invention provides the necessary torque to the thigh and shin without restricting the natural movement of the knee through rigid joints.
The use of the block-and-tackle develops additional multiplication of the pulling force of the cord locally, close to the point of application of the force, i.e., on the thigh and shin. The advantage is that, thanks to the combination of the block-and-tackle mechanism and the arms, a large multiplication of force is achieved with low additional weight, and this multiplication occurs locally, thus no long force transfer paths along the human body are required.
Another advantage of the invention is that the mechanism does not slip from its initial position on the user's body when the user moves, thanks to the ways in which it is attached with straps and thanks to its anchoring to the user's waist and heel.
A further advantage of the invention is that the arms produce a lever arm that converts the already large forces (due to the multiplication of the pulling force of the cord through the block-and-tackle mentioned above) into a rotational torque of the knee. The creation of the lever arm offers the advantage of increasing the component of the force that produces the extension torque and reducing the undesirable compressive component of the force that compresses the shin. In this way, the desired effect of assisting movement is increased while at the same time reducing the compressive stress on the tibia and knee joint and the resulting discomfort for the user.
The tilt angle of the arms can be adjusted by the user for better ergonomics. The ability to change the angle is an advantage because it offers the option of adaptation to the users' biometric measurements and the physical activity they perform.
Furthermore, the invention does not transfer forces to the user's torso, shoulders, and arms, and thus does not affect the user's correct posture and balance, achieving high ergonomics.
Finally, the invention relates to a fully wearable and portable system, as it does not require the placement of motors on a base outside the user's body.

The 15 drawings accompanying the description briefly illustrate the following:
Figure 1 shows a side view of the thigh-shin exoskeletal mechanism (a variant of the mechanism with bases on the thigh and shin) in operation during stair climbing, with its main mechanical components visible (Figure 1a). The following are shown in close-up: the cord pulling winch area (Figure 1b); the thigh pad arm area (Figure 1c); the block-and-tackle area (Figure 1d); and the shin pad arm area (Figure 1e).
Figure 2 shows a side view of the thigh-shin exoskeletal mechanism (a variant of the mechanism with bases on the thigh and shin) in operation during stair climbing, with its main mechanical components visible (Figure 2a). This Figure also shows two areas of focus of the design in detail, one on the thigh pad (Figure 2b) and the other on the shin pad (Figure 2c).
Figure 3 shows the shape of the thigh-shin exoskeletal mechanism when used during stair climbing.
Figure 4 shows a side view of the thigh-shin exoskeletal mechanism in action during stair climbing, with two distinct modes of use. Figure 4a shows how the device works when using a motor to exert force, and Figure 4b shows a close-up of the area around the thigh pad. Similarly, Figure 4c shows the thigh-shin exoskeletal mechanism, but with the pulling force applied directly by the user's hand, and Figure 4d shows a close-up of the area around the thigh pad.
Figure 5 shows a side view of the thigh-shin exoskeletal mechanism in a snapshot of its use during stair descending, with two separate modes of use. Figure 5a shows the mode of use with a motor, while Figure 5b shows the mode of use with pulling force applied directly by the user's hand.
Figure 6 shows a side view of the thigh-shin exoskeletal mechanism in use from a seated position. Figures 6a and 6b show how the device works with a motor, while Figures 6c and 6d show how it works with pulling force applied directly by the user's hand. Figures 6a and 6c show how the device operates when the user's leg is slightly bent, while Figures 6b and 6d show how it operates when the user's leg is fully extended.
Figure 7 shows the thigh pad in operation with the pulling force applied by the user's hand, both disassembled (Figure 7a) and assembled (Figure 7b).
Figure 8 shows the cord pulling winch disassembled in an isometric view (Figure 8a) and assembled in a side view (Figure 8b).
Figure 9 shows the shin pad both disassembled (Figure 9a) and assembled (Figure 9b).
Figure 10 shows a side view of the thigh-knee exoskeletal mechanism (a variant of the mechanism with bases on the thigh and knee) in action while climbing stairs, with its main mechanical components visible (Figure 10a). This Figure also shows a close-up of the knee pad area (Figure 10b).
Figure 11 shows the shape of the thigh-knee exoskeletal mechanism when used during stair climbing (Figure 11a). This Figure also shows a close-up view of the part of the device that attaches to the knee (Figure 11b).
Figure 12 shows the device's knee pad and its components when disassembled (Figure 12a) and when assembled (Figure 12b).

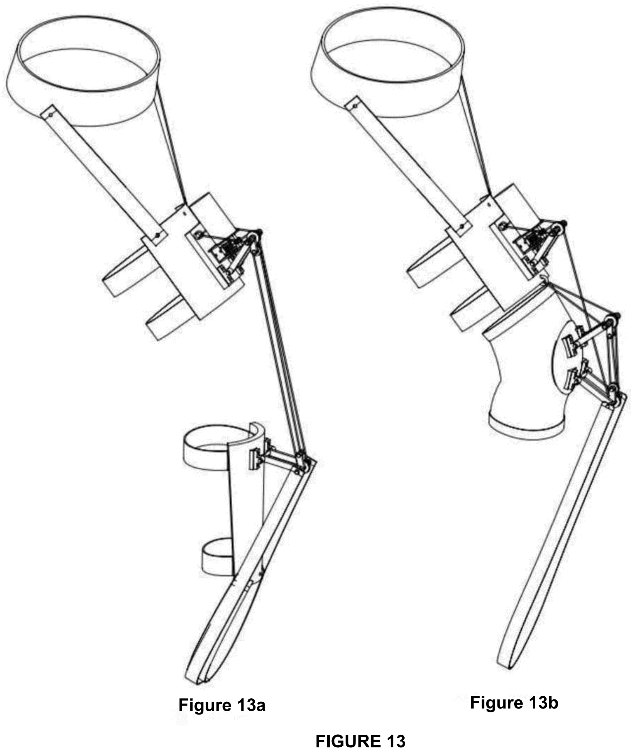

Figure 13 shows the two variants of the exoskeletal mechanism device with a cord pulling winch. Specifically, Figure 13a shows the thigh-shin variant and Figure 13b shows the thigh-knee variant.
Figure 14 shows two different ways of reeving the cord. Figure 14a shows reeving through two and one pulleys in series, while Figure 14b shows reeving through three and two pulleys in parallel.
Figure 15 shows the locations in which the batteries, processors, and sensors (e.g., accelerometers, etc.) can be installed.

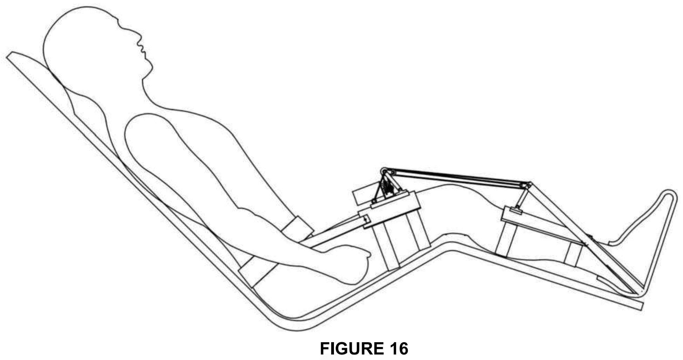

Figure 16 shows a side view of the thigh-shin exoskeletal mechanism in a snapshot of its use by a user in a reclined position on a hospital multi-crank bed.

The invention is defined by the claims.
The invention is described below with the aid of a non-limiting example and with reference to the accompanying drawings, which illustrate embodiments and applications of the inventive concept.

The flexible exoskeletal knee extension mechanism is intended, indicatively and non-restrictively, to assist the quadriceps muscles of the legs in the following indicative physical activities:
a) stair climbing;
b) stair descending;
c) extension-flexion exercises from a seated position;
d) extension-flexion exercises from a reclined position, with the shins at an angle to the thighs;
e) uphill walking;
f) downhill walking;
g) level ground walking;

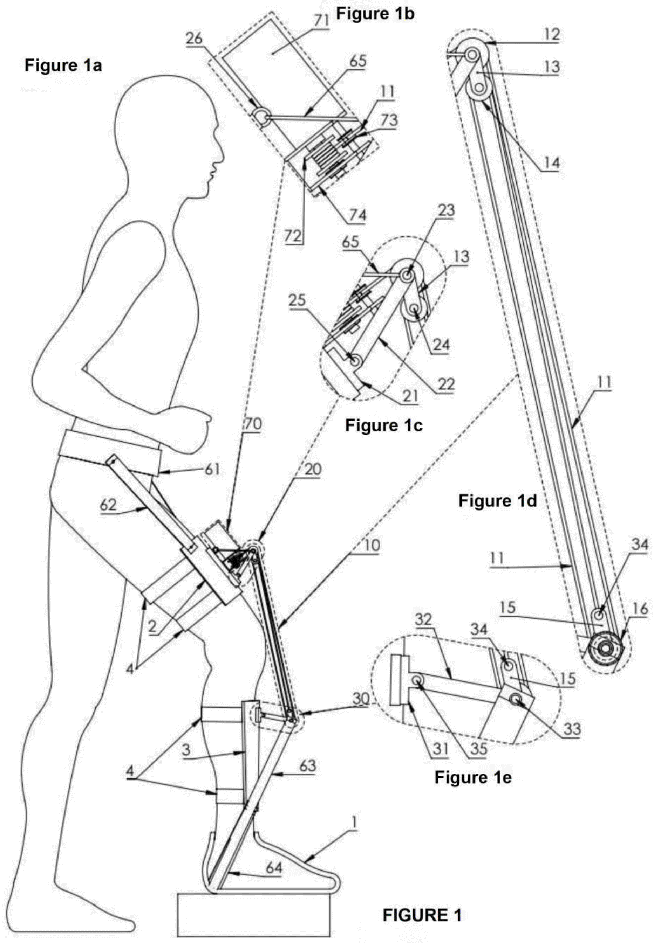

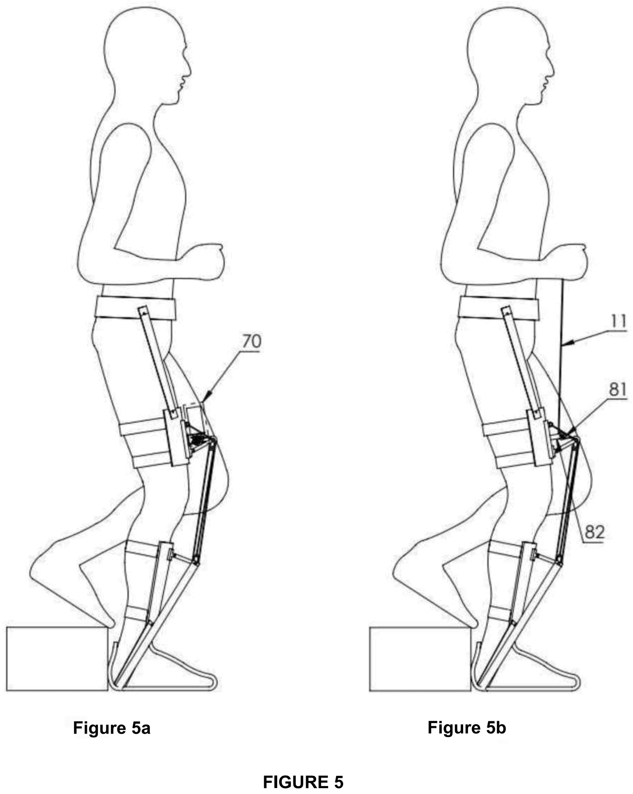

There are two basic modes of operation of the exoskeletal mechanism:
i) electrically powered using an electric winch (70) to reeve the cord (11) on the thigh pad (2) of the mechanism (Figures 1, 2, 4a, 4b, 5a, 6a and 6b); or
ii) manually (Figures 4c, 4d, 5b, 6c and 6d) with an intermediate pulley (81) for reeving the cord through (11).

The exoskeletal mechanism consists of the following components, which are described in detail below:
- a block-and-tackle (10);
- a thigh pad (2);
- an electric winch (70);
- a shin pad (3) or alternatively a knee pad (5);
- a waist belt (61) and straps (4, 62-67).

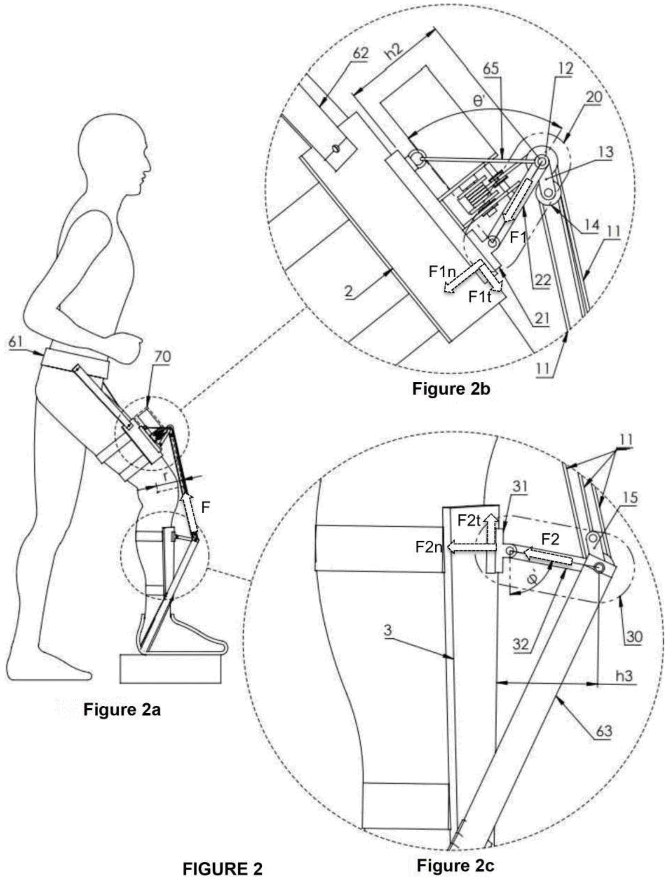

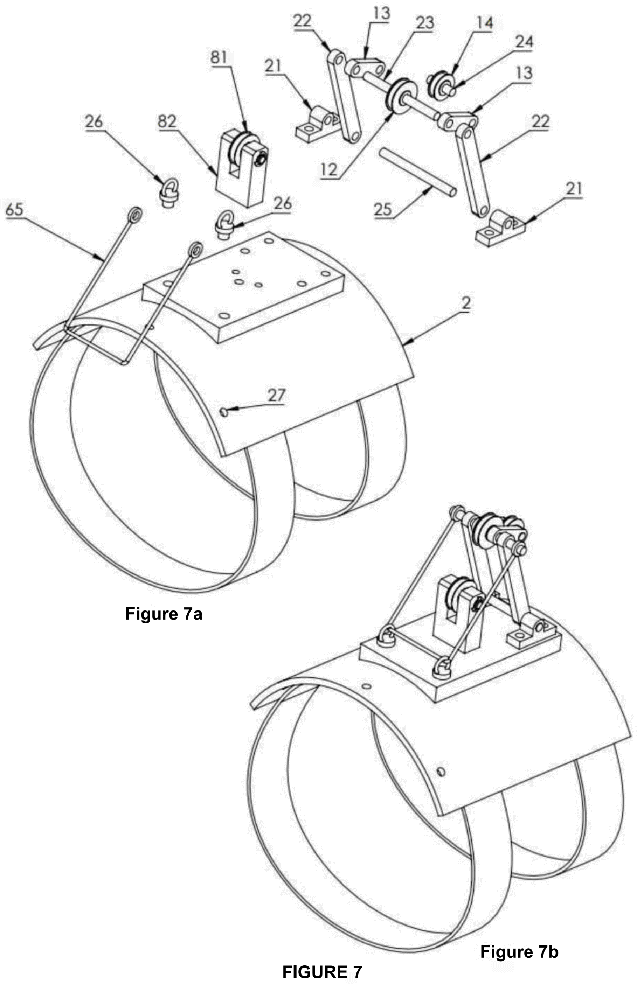

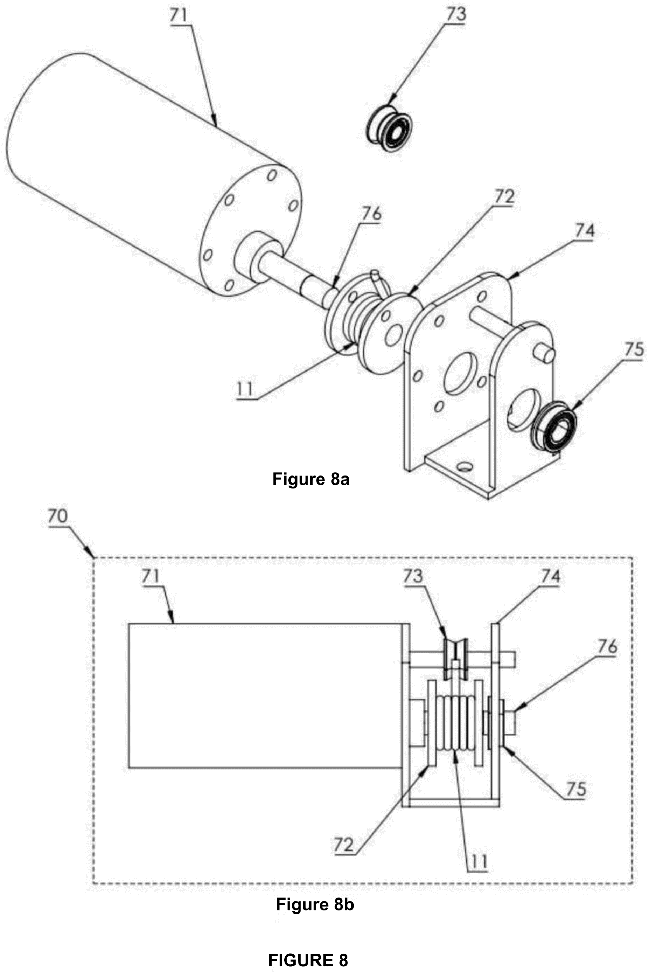

As shown in Figures 1, 2, and 3, the thigh-shin exoskeletal mechanism comprises a thigh pad (2) with an arm (20) and a shin pad (3) with an arm (30), and a block and tackle system (10) comprising pulley devices (12, 14, 16) at the free ends of the arms and a flexible tensile member, such as a cord (11). It further comprises flexible tensile members, such as, for example, fastening straps (4) of the thigh pad (2); anchoring straps (62) of the thigh pad (2); fastening straps (4) of the shin pad (3); an anchoring strap (64) of the shin pad (3) to the heel; an anchoring strap (63) of the arm (30) of the shin pad (3) to the heel; and an anchoring cord (65) (Figure 2b) of the arm (20) of the thigh pad (2) to the thigh pad. It further comprises a belt (61) around the user's waist to which the anchoring straps (62) of the thigh pad (2) are attached. Finally, it comprises an electric winch (70) for reeving the cord (11) (Figure 1 and Figure 8) or, alternatively, an intermediate pulley (81) for manually reeving the cord through (11) on a separate support base (82) (Figure 7), which is described in detail below.

The cord (11) and the pulleys (12, 14, and 16) together with the shaft of the first pulley of the thigh pad arm (23), the shaft of the second pulley of the thigh pad arm (24), the shaft of the first pulley of the shin pad arm (33) and the terminal attachment shaft of the cord of the thigh-shin variant (34), as well as the pairs of pulley links (13) and (15) of the arm (20) of the thigh pad (2) and the arm (30) of the shin pad (3) respectively, together form the mechanism of the block-and-tackle (10) (Figure 1, Figure 7, and Figure 9).

The two arms, the thigh pad arm (20) and the shin pad arm (30), as sets of technical components which are analyzed in the following paragraph, are connected to the bases by a simple rotational joint:
Specifically, according to Figure 1, the arm (20) of the thigh pad (2) consists of three parallel pairs of links: the pair of bases (21) of the thigh pad arm, the pair of first links (22) of the thigh pad arm, and the pair of pulley links (13) of the thigh pad arm. The pairs are serially connected to each other via two rotational joints (Figure 1c and Figure 9a). The first rotational joint consists of a shaft (25) of the pair of first links, which connects the pair of bases (21) to the pair of first links (22) at their lower end. The second rotational joint consists of a shaft (23) of the first pulley of the thigh pad arm, which connects the pair of first links (22) at their upper end to the pair of pulley links of the thigh pad arm (13). The pair of pulley links of the thigh pad arm (13) is connected to the shaft (23) of the first pulley and the shaft (24) of the second pulley of the thigh pad arm.

Similarly, the shin pad arm (30) consists of three parallel pairs of links: the pair of bases (31) of the shin pad arm, the pair of first links (32) of the shin pad arm, and the pair of pulley links (15) of the shin pad arm. The pairs are serially connected to each other via two rotational joints (Figure 1e). The first rotational joint consists of a shaft (35) connecting the pair of bases (31) to the pair of first links (32) at their lower end. The second rotational joint consists of a shaft (33) of the first pulley of the shin pad arm, which connects the pair of first links (32) at their upper end to the pair of pulley links (15) of the arm (30) of the shin pad (3). The pair of pulley links (15) of the shin pad arm is connected to the shaft (33) of the first pulley and the shaft (34) of the terminal attachment of the cord (11).

In summary, with regard to the supports, the pair of first links (22) of the arm (20) of the thigh pad (2) is connected via a simple rotational joint to the pair of bases (21) of the thigh pad arm, which is fixed to the thigh pad (2) (Figures 1c, 2b, 7). The pair of first links (32) of the arm (30) of the shin pad (3) is supported, via a rotational joint, on a pair of bases (31) of the shin pad arm fixed to the shin pad (3) (Figure 1 and Figure 9).

According to Figure 2, the arms (20) and (30) on the thigh pad (2) and the shin pad (3), respectively, increase the lever arm (r) (Figure 2a) of the pulling force (F) of the block-and-tackle, for the most effective transformation of the pulling force (F) of the block-and-tackle into knee extension torque. Thanks to the joints, the arms provide the option of adjusting their tilt according to the desired support, depending on the biometric dimensions and the chosen physical activity of the user.

The transmission of motion and the transfer of assistive force from the exoskeletal mechanism to the user's leg is achieved by means of a cord (11).

The cord (11) is set in motion by an electric winch (70) installed on the thigh pad (2) (Figures 1, 1d, 4a, 4b). To pull the cord, one end of the cord (11) is attached to a drum (72) (Figures 1b and 8b) of the winch (70) and, indicatively, the other end of the cord (11), according to Figure 1d, is reeved through the first pulley (12) of the thigh pad arm and is directed to the first pulley (16) of the shin pad arm, then the cord (11) is reeved through the second pulley (14) of the thigh pad arm and finally the cord (11) ends and is attached to a terminal attachment shaft (34) of the thigh-shin variant cord (Figure 1 and Figure 9).

Alternatively, to pull the cord, one end of the cord (11) is pulled by the user's hand (Figures 4c, 5b, 6c and 6d), while the other end of the cord is passes through an intermediate pulley (81) of manual cord (11) pulling, which pulley is connected to a support base (82) on the thigh pad (Figure 4d) and from there the cord (11) continues to the pulley (12) and, indicatively, as shown in Figure 1d, is directed to the first pulley (16) of the shin pad arm, then the cord (11) is passes through the second pulley (14) of the thigh pad arm, and finally the cord (11) ends and is attached to the terminal attachment shaft (34) (Figures 1d and 9) as above.

The block-and-tackle (10) multiplies the pulling force (f) of the cord (11). The arms (20, 30) form a lever arm (r), i.e. the perpendicular distance of the pulling force (F) of the block-and-tackle (10) to the axis of rotation of the shin relative to the thigh, which lever arm (r) converts the pulling force (F) of the block-and-tackle (10) into a knee extension torque (Figure 2a).
Therefore, the following applies: τ = rxF and F=Nxf, if friction is ignored, where τ is the assistive torque exerted on the knee joint, r is the lever arm, F is the pulling force of the block-and-tackle (10), N is the multiplication factor of the block-and-tackle (10) and f is the pulling force of the cord (11).

During use, at the thigh pad (2), the angle θ' created by the pair of first links (22) relative to their bases (21) towards the user's pelvis (angle θ' in Figure 2b) must always be acute, so that the force (F1) transmitted by the pair of first links (22) to the thigh pad (2) is broken down, on the one hand, into a component (F1n) perpendicular to the thigh pad (2) (Figure 2b), which maintains the grip of the thigh pad (2) to the thigh, and on the other hand into a tensile component (F1t) in parallel with the thigh (2), which stretches the anchoring straps (62) and is transferred and anchored to the user's pelvis via the waist belt (61).

During use, on the shin pad (3), the angle φ' created by the pair of first links (32) relative to the pair of bases (31) towards the user's foot must be acute (angle φ', Figure 2c) so that the force (F2) transferred from the pair of first links (32) to the shin pad (3) is broken down, on the one hand, into a component (F2n) perpendicular to the shin pad (3) (Figure 2c) component (F2n) which maintains the grip of the shin pad (3) on the shin, and on the other hand into a tensile component (F2t) parallel to the shin pad (3), which stretches the anchoring strap (64) and anchors it to the user's foot.

The height (h2) (Figure 2b) of the arm (20) of the thigh pad (2) is the vertical distance from the upper end of the pair of first links (22) of the thigh pad arm to the pair of bases (21) of the thigh pad arm.
The height (h3) (Figure 2c) of the arm (30) of the shin pad (3) is the vertical distance from the upper end of the first pair of links (32) of the arm (30) of the shin pad (3) to the pair of bases (31) of the arm (30) of the shin pad (3).

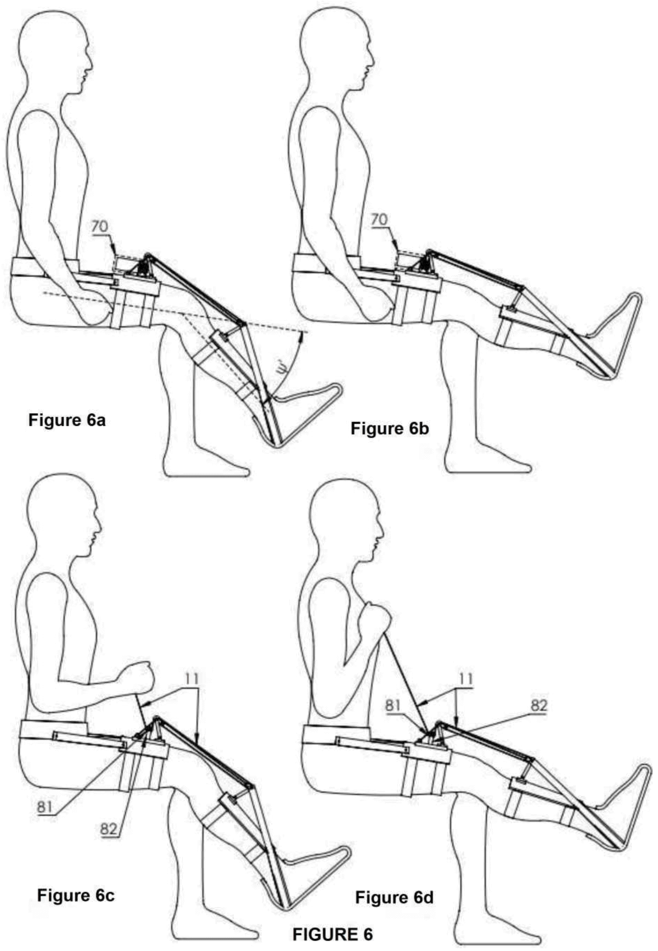

For the proper function of the invention, the desired range (ψ') of the assisted knee movement angle is defined as the angle of flexion of the knee from full extension to the position at which the cord (11) of the block-and-tackle (10) of the exoskeletal mechanism marginally does not touch the user's knee (Figures 6a and 6b).
The heights (h2) and (h3) result from the desired range of motion angle (Fig. 6a, angle ψ') of the knee with assistance due to the fact that from a knee flexion angle greater than ψ', the cord (11) begins to touch the knee (Fig. 6A). In the event that the cord (11) touches the knee, a pulling force (f) may continue to be exerted, but the lever arm (r) is now minimized and the benefit is practically limited. Therefore, users or therapists define the angle of movement ψ at which assistance is desired, and based on this angle ψ, the heights h2 and h3 of the arms (20) and (30) are adjusted accordingly by appropriately adjusting the acute angles θ' and φ' (Figures 2b and 2c), i.e., the acute angle θ' created by the pair of first links (22) relative to their bases (21) towards the user's pelvis and the acute angle φ' created by the pair of first links (32) relative to the pair of bases (31) towards the user's foot.

Regarding the use of the cord (11), there are two alternatives: pulling the cord with an electric winch (70) and pulling it manually:
In the case of pulling the cord with an electric winch (70) (Figs. 1, 4, and 8), there is a motor (71) which is supported on the thigh pad (2) with a base (74) and, as shown in Figure 8, includes a rolling bearing (75) of the shaft (76) of the motor (71) with respect to the base (74), a drum (72) for reeving the cord (11), and a free pulley (73) for driving the cord (11) towards the pulley (12) of the thigh pad (2) (Fig. 2b). The motor (71), the base (74), the winding drum (72), the rolling bearing (75), and the free pulley (73) together constitute the pulling winch (70).

In the case of manual pulling, instead of a pulling winch (70), there is an intermediate pulley (81) on the thigh pad on a support base (82) (Figures 4c, 4d, 5b, 6c, 6d, and 7). In this case, the free end of the cord (11) is pulled by the user's hand (Figures 4c, 5b, 6c, and 6d).

As for the thigh pad (2), it is fastened around the thigh with fastening straps (4) (Figure 1). In addition, the thigh pad (2) is anchored to a waist belt (61) using anchoring straps (62) (Figure 1), which are connected to specially shaped receptacles (e.g., connection holes) (27) (Figure 7) with screws or corded pins or other similar fastening means. By means of the waist belt (61), the anchoring straps (62) and the fastening straps (4), the thigh pad (2) does not slip relative to the thigh during the user's physical activity, even when the exoskeletal mechanism exerts its maximum pulling force.
In addition, the upper end of the pair of first links (22) is connected to the thigh pad (2) using an anchoring cord (65) (Figures 1b, 2b, and 7). One end of the anchoring cord (65) is attached to one end of the shaft (23) of the first pulley (12) of the arm (20) of the thigh pad (2) and the other end of the anchor cord (65) is attached to the other end of the shaft (23) (Figure 7). In between, the anchoring cord (65) passes through loops (26) permanently attached to the thigh pad (2) (Figs. 1b and 7). The acute angle of tilt θ' of the pair of first links (22) of the thigh pad (2) with respect to the bases (21) determines the exact length of the anchoring cord (65) (Figs. 2b and 7). Thus, the longer the anchoring cord (65) is allowed to extend, the greater the angle θ' of the pair of first links (22) of the arm (20) of the thigh pad (2) with respect to the pair of bases (21), and therefore the greater the desired range ψ' of the assisted movement angle of the knee (Figures 6a and b).
The anchoring strap (65) in combination with the arm (20) and the block-and-tackle (10) ensure that the value of the acute angle θ' is maintained.

As for the shin pad (3), it is fastened around the shin with fastening straps (4) (Figure 1). In addition, the shin pad (3) is anchored to the user's heel with an anchoring strap (64) (Figure 1a), the ends of which are connected to the shin pad (3) in specially shaped receptacles (e.g., connection holes) (36) (Figure 9). The ends of the shaft (33) of the first pulley of the shin pad arm are connected to an anchoring strap (63) which also passes under the user's heel (Figures 1a and 9).
The acute angle of tilt φ' of the pair of first links (32) of the shin pad arm relative to the pair of bases (31) of the shin pad arm determines the exact length of the anchoring strap (63) of the arm (30).
The greater the acute angle of tilt φ' of the pair of first links (32) relative to the pair of bases (31), the greater the exact length of the anchoring strap (63).

The anchoring straps (63) and (64) (Figure 1a) pass over the ankle joint so that the force exerted through these straps does not produce a flexion moment of the foot relative to the shin.

To stabilize the anchoring straps (63 and 64) under the heel during the user's physical activity, it is necessary to use footwear (1) or an ankle brace, stocking, etc. (Fig. 1).1.

An indicative method of positioning the above variant of the thigh-shin variant of the flexible exoskeletal knee extension mechanism is described in the following numbered steps, which are performed by the user, or with the help of their caregiver (Fig. 2, Fig. 3, Fig. 7, and Fig. 9):
1. Before placing the device on the user, the thigh pad (2) and the shin pad (3) are placed on the same level, leaving a distance between the thigh pad (2) and the shin pad (3) of approximately twice the final distance between them when the mechanism is worn. The cord (11) is reeved through the pulleys.
2. The waist belt (61) is worn by the user.
3. Using the anchor straps (62), the waist belt (61) is connected to the thigh pad (2).
4. The thigh pad (2) is placed on the user's thigh and fastened to it using the fastening straps (4). The thigh pad (2) rests on the front of the user's thigh.
5. The shin pad (3) is placed on the user's shin.
6. The anchor straps (64 and 63) of the shin pad (3) are placed under the user's heel. At this stage, the assistance of a caregiver will be necessary if the user cannot reach their foot with their hand.
7. The user puts on their shoe (1) to stabilize the anchor straps (64) and (63).
8. Then adjust the shin pad (3) so that its upper edge is slightly below the point of attachment of the quadriceps tendon to the shin. The shin pad (3) rests against the front of the user's shin.
9. The shin pad (3) is fastened using the fastening straps (4).
10. Finally, the cord (11) is tightened until all the elements are in the correct position and orientation, i.e. until the cord (11) and the anchoring straps (62-65) are fully stretched, at which point the pairs of first thigh and shin pad connectors (22) and (33) respectively have assumed their acute angles of tilt θ' and φ' respectively.

The thigh-shin variant of the exoskeletal mechanism described above, as can be seen from the indicative way of wearing the exoskeletal mechanism, leaves the user's knee intact and unaffected.

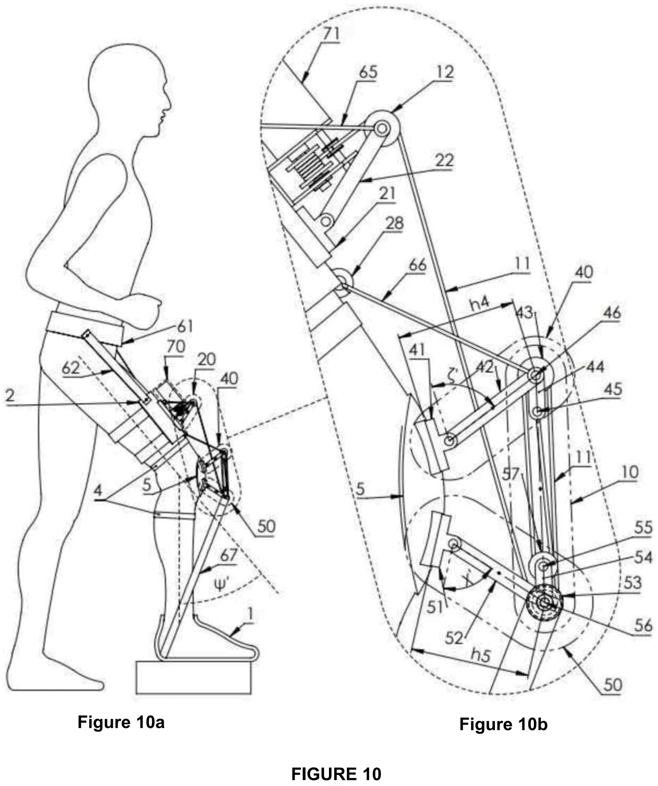

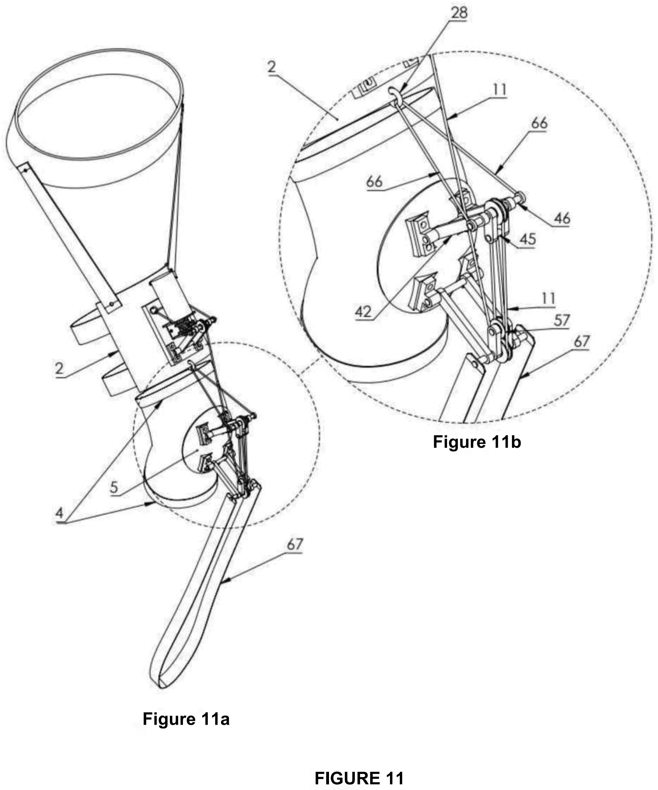

A variant of the exoskeletal mechanism is shown in Figures 10 and 11, where, instead of a thigh pad (2) and a shin pad (3), it consists of a thigh pad (2) and a knee pad (5). In this application of the same inventive idea, the shin pad (3) is replaced by a knee pad (5) which comprises two arms, one arm of the knee pad anchored to the thigh pad (40), and one arm of the knee pad anchored to the heel (50). In other words, in this variant, both arms are positioned on top of the knee pad (5). The arm (20) of the thigh pad remains in this variant in exactly the same position as described above, and now guides the cord (11) towards the arm of the knee pad that is anchored to the heel (50). Otherwise, the mechanism in this variant is similar to the previous variant, i.e., it also comprises the block-and-tackle (10), the straps (4) for attaching the thigh pad (2) and the knee pad (5), the anchoring belt (61) around the user's waist where the anchoring straps (62) of the thigh pad (2) are fastened, the anchoring cord (66) of the arm (40) of the knee pad (5) to the thigh pad (2), the anchoring strap (67) of the arm (50) of the knee pad (5) to the heel and carries to the thigh pad (2) the pull winch (70) of the cord (11) or, alternatively, the intermediate pulley (81) for manual reeving of the cord (11).

As shown in Figures 10a and 10b, with regard to the knee pad (5), the arm (40) of the knee pad anchored to the thigh pad, consists of three parallel pairs of links: the pair of bases (41); the pair of first links (42); and the pair of arm pulley links (44).
The arm (50) of the knee pad anchored to the heel (50) consists of three parallel pairs of links: the pair of bases (51); the pair of first links (52); and the pair of arm pulley links (54).

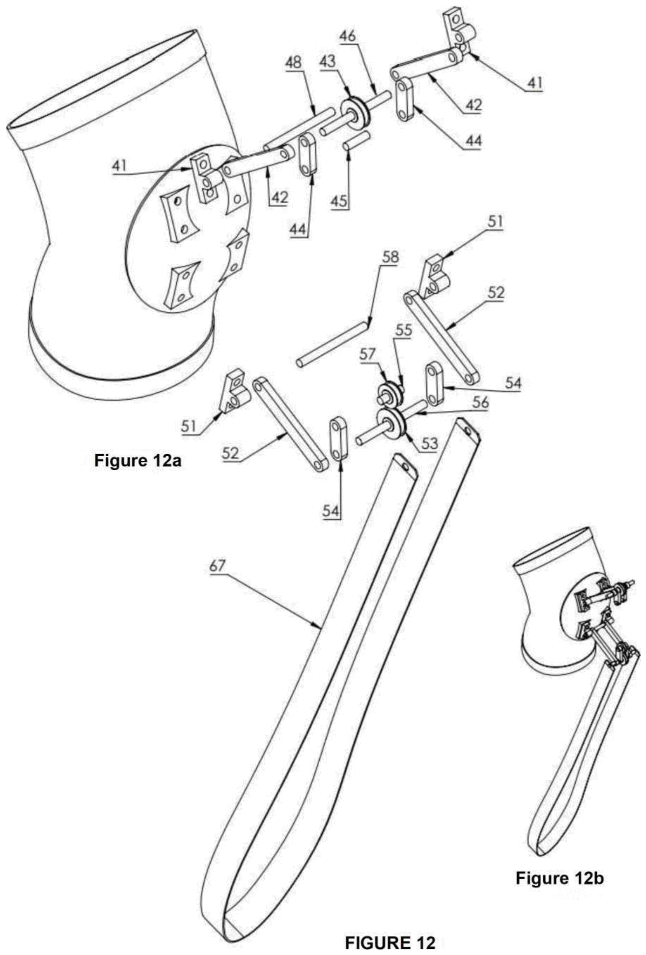

As shown in Fig. 12a, the first rotational joint of the arm (40) anchored to the thigh pad, consists of a shaft (48) of the first link pair, which connects the base pair (41) to the first link pair (42) at their lower end. Similarly, the first rotational joint of the arm (50) anchored to the heel is composed of a shaft (58) of the first link pair, which connects the base pair (51) to the first link pair (52) at their lower end.
Additionally, as shown in the same Figure (12a), the pair of pulley links (44) of the arm (40) of the knee pad (5) is connected to the shaft (46) of the first pulley and the shaft (45) of the terminal connection of the cord (11). Similarly, the pair of pulley links (54) of the arm (50) of the knee pad (5) is connected to the shaft (56) of the first pulley and the shaft (55) of the second pulley of the arm (50).

As shown in Figs. 10 and 11, the heights (h4) and (h5) of the arms (40) and (50) respectively of the knee pad (5), defined by the upper ends of the posts (42) and (52) to the bases (41) and (51) respectively, are again determined by the desired range ψ' of the movement angle (Fig. 6b) of the knee with assistance, as described above.
In the thigh-knee variant, when the knee is fully extended, the terminal attachment shaft (45) of the cord (11) of the knee pad arm (40) converges and "meets" the second pulley (57) of the arm (50) of the knee pad. The contact of the shaft (45) with the pulley (57) acts as a "stop" that halts the movement assistance through the system and thus mechanically prevents the knee from overextending due to excessive traction force of the mechanism.
At an angle of movement equal to ψ, the cord (11) begins to touch the knee and the lever arm (r) is minimized.
The knee pad (5) is fastened around the shin with fastening straps (4) (Figure 10).
At the ends of the pair of first links (42) of the arm (40) of the knee pad, there is a shaft (46) of the first pulley of the arm (40) of the knee pad, which is anchored to the thigh pad (2) with an anchoring cord (66) passing through a specially shaped receptacle (e.g., a loop) (28) (Figure 11). The anchoring cord (66) of the arm (40), in cooperation with the anchoring straps (62) of the thigh pad to the waist belt (61), can counterbalance the rotational torque of the thigh pad (2) relative to the user's thigh, which is caused by the transfer of the pulling force (f) of the cord (11) to the arm (20) of the thigh pad (2) as well as to the winch (70) or the intermediate pulley (81).

At the ends of the pair of first links (52) of the arm (50) of the knee pad, there is the shaft (56) of the first pulley, the ends of which are anchored by means of an anchoring strap (67) under the user's heel (Figures 10a, 11b, and 12). The anchoring strap (67) passes over the ankle joint so that the force exerted through this strap does not produce a flexion moment of the foot relative to the shin. A stocking or footwear (1) is used to stabilize the anchoring strap (67) under the heel during the user's physical activity (Figure 10).

The angle of tilt ζ' of the first pair of links (42) relative to the pair of bases (41) on the side of the thigh pad, as well as the angle of tilt χ' of the first pair of links (52) relative to the pair of bases (51) on the side of the user's foot (Figure 10b), change during foot movement.

According to Figure 10b, the cord (11) of the block-and-tackle, which either starts from the winch (70) or is directed by the user's hand, first passes through the pulley (12) of the pair of first links (22) and is directed to the first pulley (53) of the arm (50). From there, it continues to the first pulley (43) of the arm (40), then to the second pulley (57) of the arm (50), and from there it ends at the terminal attachment shaft (45) of the cord (11). A similar method of reeving the cord (11) is therefore followed with the thigh-shin variant described above.

An indicative method of positioning the thigh-knee variant of the flexible exoskeletal knee extension mechanism is described in the following numbered steps, which are performed by the user or with the help of their caregiver (Fig. 7, Fig. 10, Fig. 11, and Fig. 12):
1. Before placing the device on the user, the thigh pad (2) and the knee pad (5) are placed on the same level, leaving a distance between the thigh pad (2) and the knee pad (5) that is approximately twice the final distance between them when the mechanism is worn. The cord (11) is reeved through the pulleys.
2. The waist belt (61) is worn by the user.
3. Using the anchor straps (62), the waist belt (61) is connected to the thigh pad (2).
4. The thigh pad (2) is placed on the user's thigh and fastened to it using the fastening straps (4).
5. The knee pad (5) is placed on the user's knee.
6. The knee pad (5) is then secured using the fastening straps (4).
7. The user fully extends the knee joint.
8. The user positions the shaft (45) so that it rests on the pulley (57).
9. Then, the user brings the anchoring strap (67) of the arm (50) of the knee pad (5) under the user's heel. In this step and the following ones, the assistance of a caregiver will be necessary if the user cannot reach their foot with their hand.
10.The user puts on their footwear (1) to secure the strap (67).
11. They connect the arm (40) to the thigh pad (2) with the anchoring cord (66) through the loop (28) (Figs. 10 and 11a).
12. Finally, the cord (11) is tightened until all the elements are in the correct position and orientation, i.e., until the cord (11) and the anchoring straps (62, 66, 67) are fully stretched.

The thigh-knee variant of the exoskeletal mechanism described above offers mechanical protection against knee hyperextension and counteracts the rotational torque of the thigh pad relative to the thigh.

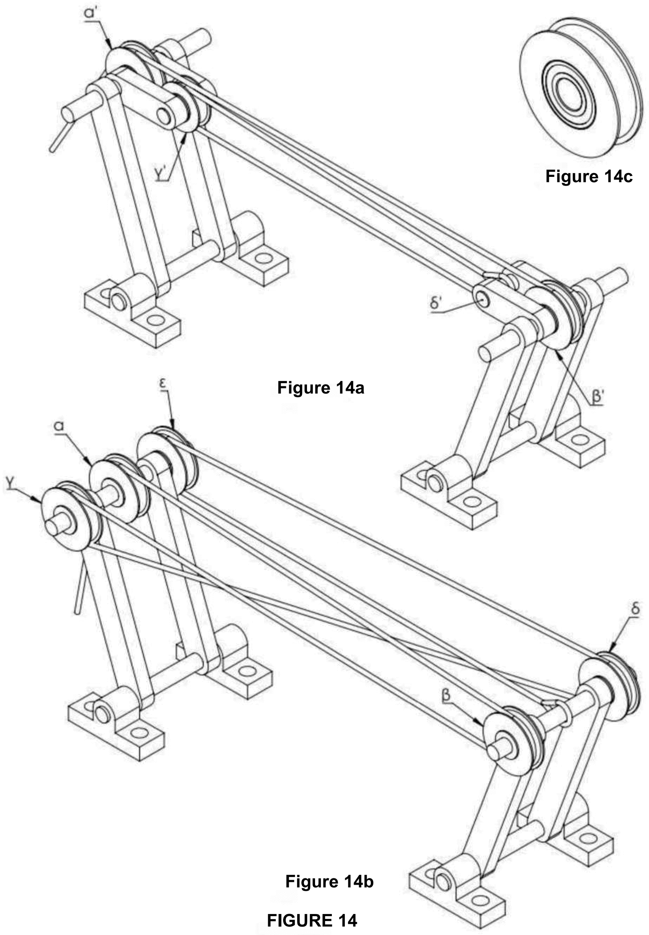

Alternative methods of reeving the cord through the pulleys of the block-and-tackle (10) may also be used. Indicatively Figure 14 shows two variants of the cord reeving method.
Figure 14a shows the reeving method presented in the above examples of both the thigh-shin variant and the thigh-knee variant, which includes three pulleys. According to this method, one of the arms (20, or 30, or 40, or 50) comprises two pulleys (α', γ') arranged in series, and the other arm (20, or 30, or 40, or 50) comprises one pulley (β') and one terminal attachment shaft (δ') for the cord (11). The cord (11) initially passes through pulley α', is directed towards the upper side of pulley β', then exits from the lower side of pulley β', is directed to the lower side of pulley γ', exits from the upper side of pulley γ', and ends up and is attached to terminal attachment shaft δ'. The traction force multiplication factor (f) of cord (11) is 3 (i.e., F=3xf if friction is ignored).

Figure 14b illustrates a method of reeving the cord comprising five pulleys, which can be applied to both variants, i.e., the thigh-shin variant and the thigh-knee variant. In this method, one arm comprises three pulleys in parallel with each other and the other arm comprises two pulleys in parallel with each other. The cord initially passes through pulley α and is directed towards the upper side of pulley β. It then exits from the lower side of pulley β and goes to the upper side of pulley γ. From the lower side of pulley γ, it reaches the lower side of pulley δ. Then, from the upper side of pulley δ, it reaches the upper side of pulley ε and finally, from the lower side of pulley ε, it ends up and attaches to the middle of the shaft that connects the two pulleys of the corresponding arm. This reeving method provides a greater multiplication factor for the pulling force (f) of the cord (11) and, at the same time, the paths of the cord (11) do not intersect. The pulling force multiplication factor (f) of the cord is 5 (i.e. F=5xf if friction is ignored).

Different ways of reeving the cord lead to different multiplication factors, and it is up to the device manufacturer to select the most appropriate one from the literature.

It should be noted that all pulleys, in all variants of the block-and-tackle, have, each one of them separately, an internal rolling bearing (ball bearing) with which they are mounted on the shafts (Figure 14c). This is necessary because in a block-and-tackle, each pulley rotates at a different angular velocity.

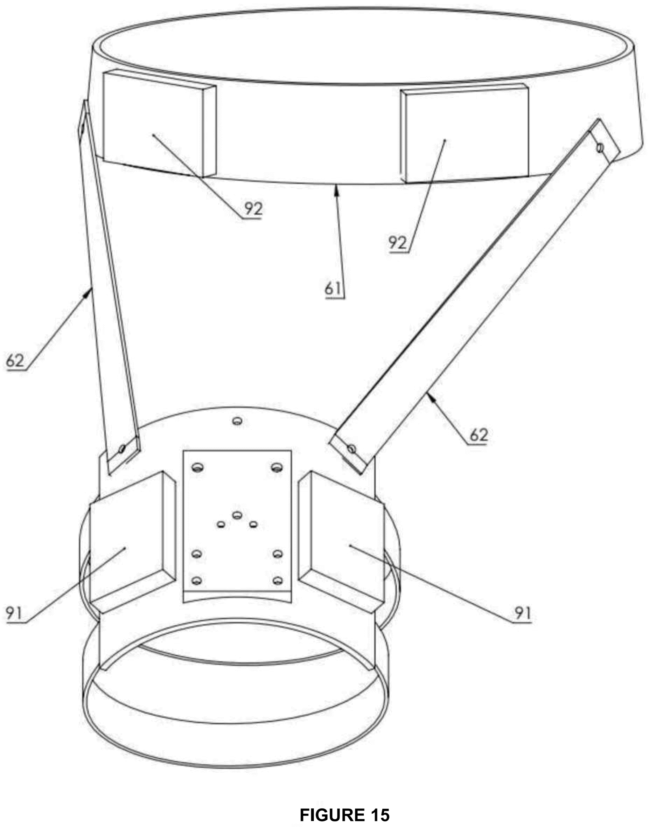

The electric winch (70) can be powered by batteries located either on the user's waist belt (61) (locations 92, Figure 15) or on the thigh pad (2) (locations 91, Figure 15).
The electric motor (71) of the winch (70) can be driven by an electronic control unit which includes an electronic processor located in specially designed compartments (91) on the thigh pad (2) (Fig. 15). The electronic processor of the thigh pad may receive wireless signals from an additional electronic processor placed in specially shaped compartments (92) on the user's waist belt (61) (Fig. 15).
The electronic processors may receive electrical signals from electronic sensors located on the waist belt (61), the thigh pad (2), the shin pad (4), or the knee pad (5). Indicative sensors that could be used for automatic control of the electric motor (71) are: accelerometers, gyroscopes, magnetometers, electromyographs, dynamometers, pressure sensors, etc.

The invention can be applied in the field of production of exoskeletal robotic systems and physiotherapy devices.

Below is a list of the symbols used in the detailed description with their names:
- 1: footwear;
- 2: thigh pad;
- 3: shin pad;
- 4: fastening straps;
- 5: knee pad;
- 10: block-and-tackle (mechanism);
- 11: block-and-tackle cord;
- 12: first pulley of the thigh pad arm;
- 13: pair of pulley links of the thigh pad arm;
- 14: second pulley of the thigh pad arm;
- 15: pair of pulley links of the shin pad arm;
- 16: first pulley of the shin pad arm;
- 20: thigh pad arm;
- 21: pair of bases of the thigh pad arm;
- 22: pair of first links of the thigh pad arm;
- 23: shaft of the first pulley of the thigh pad arm;
- 24: shaft of the second pulley of the thigh pad arm;
- 25: shaft connecting the pair of first links and the pair of bases of the thigh pad arm;
- 26: loops for passing the anchoring cord (65);
- 27: shaped receptacles (e.g., holes) for connecting the anchoring straps (62) to the thigh pad;
- 28: shaped receptacles (e.g., loops) for passing the anchoring cord (66);
- 30: shin pad arm;
- 31: pair of bases of the shin pad arm;
- 32: pair of first links of the shin pad arm;
- 33: shaft of the first pulley of the shin pad arm;
- 34: terminal attachment shaft of the cord of the thigh-shin variant;
- 35: shaft connecting the pair of first links and the pair of bases of the shin pad arm;
- 36: shaped receptacles (e.g., holes) for connecting the anchoring strap (64) to the shin pad arm;
- 40: knee pad arm anchored to the thigh pad;
- 41: pair of bases of the knee pad arm anchored to the thigh pad;
- 42: pair of first links of the knee pad arm anchored to the thigh pad;
- 43: first pulley of the knee pad arm anchored to the thigh pad;
- 44: pair of pulley links of the knee pad arm anchored to the thigh pad;
- 45: terminal attachment shaft of the thigh-knee variant cord;
- 46: shaft of the first pulley of the knee pad arm anchored to the thigh pad;
- 48: shaft of the joint of the pair of first links to the pair of bases of the knee pad arm anchored to the thigh pad;
- 50: knee pad arm anchored to the heel;
- 51: pair of bases of the knee pad arm anchored to the heel;
- 52: pair of first links of the knee pad arm anchored to the heel;
- 53: first pulley of the knee pad arm anchored to the heel;
- 54: pair of pulley links of the knee pad arm anchored to the heel;
- 55: shaft of the second pulley of the knee pad arm anchored to the heel;
- 56: shaft of the first pulley of the knee pad arm anchored to the heel;
- 57: second pulley of the knee pad arm anchored to the heel;
- 58: shaft of the joint of the first pair of links to the pair of bases of the knee pad arm anchored to the heel;
- 61: waist belt;
- 62: straps anchoring the thigh pad (2) to the waist belt;
- 63: strap anchoring the shin pad arm (30) to the heel;
- 64: anchoring strap of the shin pad (3) to the heel;
- 65: anchoring cord of the thigh pad arm to the thigh pad (2);
- 66: anchoring cord of the knee pad arm anchored to the thigh pad;
- 67: anchoring strap of the knee pad arm anchored to the heel (50);
- 70: electric cord pulling winch (11);
- 71: electric motor of the electric winch;
- 72: cord reeving drum (11);
- 73: free cord guide pulley (11);
- 74: support base of the electric winch;
- 75: rolling bearing of the shaft (76);
- 76: motor shaft (71);
- 81: intermediate pulley for manual cord pulling (11);
- 82: support base for intermediate pulley for manual cord pulling (11);
- 91: mounting locations/compartments for electronic components and batteries on the thigh pad;
- 92: mounting locations/compartments for electronic components and batteries on the waist belt;
- α: first pulley of the five-pulley cord reeving mode;
- β: second pulley;
- γ: third pulley;
- δ: fourth pulley;
- ε: fifth pulley;
- α': first pulley of the three-pulley cord reeving mode;
- β': second pulley;
- γ': third pulley;
- δ': fastening shaft;
- θ': the angle of tilt of the pair of first links (22) relative to their bases (21) towards the user's pelvis;
- φ: the angle of tilt of the pair of first links (32) of the shin pad arm relative to the pair of bases (31) of the shin pad arm;
- r: lever arm;
- ψ': the desired range of motion of the knee with assistance;
- ζ: the angle of tilt of the first pair of links (42) relative to the pair of bases (41) on the side of the thigh pad;
- χ': the angle of tilt of the first pair of links (52) relative to the pair of bases (51) on the side of the user's foot (Figure 10b);
- h2: the height of the arm (20) of the thigh pad (2);
- h3: the height of the arm (30) of the shin pad (3);
- h4: the height of the arm (40) of the knee pad (5);
- h5: the height of the arm (50) of the knee pad (5);
- f: the pulling force of the cord (11);
- F: the pulling force of the block-and-tackle;
- F1: the force transferred from the pair of first links (22) to the thigh pad (2);
- F1n: the component of force F1 perpendicular to the thigh pad;
- F1t: the component of force F1 in parallel with the thigh pad;
- F2: the force transferred from the first pair of links (32) to the shin pad (3);
- F2t: the component of force F2 perpendicular to the shin pad;
- F2n: the component of force F2 in parallel with the shin pad;

## Claims

1. A flexible exoskeletal knee extension system, consisting of two bases, flexible fastening and anchoring tensile members for the bases, and a flexible tensile member for pulling one base from the other, **characterized in that** it comprises
- a block-and-tackle, comprising pulleys for reeving the flexible tensile member;
- at least two articulated arms connected via the block-and-tackle, where each arm, consists of at least two links connected by simple rotational joints and also each arm being connected by a simple rotational joint to one of the two bases;
- flexible tensile members with which each base is attached to an assisted body member; and
- flexible tensile members with which each base and each arm is anchored to adjacent unassisted body members or to the other base.

2. A flexible exoskeletal system according to claim 1, **characterized in that** one base is a thigh pad (2) and the second base is a shin pad (3), wherein the thigh pad (2) is connected to an arm (20) of simple rotational joints and links (21, 22) and where the shin pad (3) is connected to an arm (30) with simple rotational joints and links (31, 32);
wherein the arms (20 and 30) are connected at their other end via a block-and-tackle system (10), which block-and-tackle (10) includes a cord (11) and a pulley arrangement with at least two pulleys (12, 16) and corresponding shafts, at the free ends of the arms;
and **in that** it comprises
- fastening straps (4) of the thigh pad (2) around the thigh;
- anchoring straps (62) of the thigh pad (2) to an anchoring belt (61) around the user's waist;
- an anchoring cord (65) of the arm (20) to the thigh pad (2);
- fastening straps (4) of the shin pad (3) around the shin;
- an anchoring strap (64) of the shin pad (3) for anchoring under the user's heel; and
- an anchoring strap (63) of the arm (30) of the shin pad (3) for anchoring under the user's heel.

3. A flexible exoskeletal system according to claim 1, **characterized in that** one base is a thigh pad (2) and the second base is a knee pad (5), wherein the thigh pad (2) is connected to an arm (20) of simple rotational joints and links (21, 22), and where the knee pad (5) is connected to two arms (40 and 50) of simple rotational joints and links (41, 42 and 51, 52);
wherein the arm (20) is connected at its other end via a pulley (12) and a cord (11) to the block-and-tackle (10);
wherein the said block-and-tackle (10) includes a pulley arrangement with at least two pulleys (43, 53) and corresponding shafts, which connect the free ends of the arms (40 and 50) to the cord (11);
and **in that** it comprises
- fastening straps (4) of the thigh pad (2);
- anchoring straps (62) of the thigh pad (2) to an anchoring belt (61) around the user's waist;
- fastening straps (4) of the knee pad (5);
- an anchoring cord (66) of the arm (40) of the knee pad (5) in a shaped receptacle/loop (28) of the thigh pad (2); and
- an anchoring strap (67) of the arm (50) under the heel.

4. A flexible exoskeletal system according to claims 2 and 3, **characterized in that** the thigh pad (2) comprises an electrically driven winch (70) from which the cord (11) exits, and **in that** the end of the cord (11) is attached to the drum (72) of the winch (70).

5. A flexible exoskeletal system according to claim 4, **characterized in that** the electric winch (70) is powered by batteries located either in the user's waist belt (61) or in the thigh pad (2).

6. A flexible exoskeletal system according to claims 4-5, **characterized in that** the thigh pad (2) and/or the waist belt (61) have an electronic control unit for the electric motor (71), consisting of at least one electronic processor and electronic sensors located in the waist belt (61) and/or in one of the bases (2, 3, 5).

7. A flexible exoskeletal system according to claims 2-3, **characterized in that** the thigh pad (2) comprises a support base (82) with an intermediate pulley (81) for manually pulling the cord (11).

8. A flexible exoskeletal system according to claim 2, **characterized in that** the first joint of the arm (20) of the thigh pad (2) forms an acute angle θ' with respect to its base towards the user's pelvic side, and **in that** the first joint of the arm (30) of the shin pad (3) forms an acute angle φ' with respect to its base towards the user's foot.

9. A flexible exoskeletal system according to claims 2-3, **characterized in that** one of the arms (20, or 30, or 40, or 50) comprises three pulleys (a, c, e) in parallel with each other and the other arm (20, or 30, or 40, or 50) comprises two pulleys (b, d) in parallel with each other, wherein the cord (11) initially passes through pulley α, is directed to the upper side of pulley β, then exits from the lower side of pulley β, is directed to the upper side of pulley γ, then from the lower side of pulley γ it reaches the lower side of pulley δ and then from the upper side of pulley δ, reaches the upper side of pulley ε and finally from the lower side of pulley ε ends up and attaches to the middle of the shaft that connects the two pulleys (β, δ) of the corresponding arm.

10. A flexible exoskeletal system according to claims 2-3, **characterized in that** one of the arms (20, or 30, or 40, or 50) comprises two pulleys (α', γ') in series with each other and the other arm (20, or 30, or 40, or 50) comprises one pulley (β') and a terminal attachment shaft (δ') of the cord (11), wherein the cord (11) initially passes through pulley α', is directed towards the upper side of pulley β', then exits from the lower side of pulley β', is directed to the lower side of pulley γ', exits from the upper side of pulley γ' and ends up and is attached to terminal attachment shaft δ'.

11. A flexible exoskeletal system according to claim 8, **characterized in that** the angle θ' and the angle φ' are adjusted by increasing or decreasing the length of the anchoring cord (65) and the anchoring strap (64), respectively.

12. A flexible exoskeletal system according to claim 3, **characterized in that** when the foot is in an extended position, the two arms (40 and 50) of the knee pad (3) converge towards each other and meet, acting as a "stop" that halts the assistance of movement through the system.
